# EUROPEAN PATENT APPLICATION

(11) **EP 1 940 114 A1**
(43) Date of publication of application: **02.07.2008**
(21) Application number: 07254833.2
(22) Date of filing: 12.12.2007
(51) Int. Cl.: H04L 29/06, H04M 7/12, H04M 1/253, H04L 29/12

(54) **Using secondary channels to communicate IP addresses for point-to-point communication**

(30) Priority: 30.12.2006 US 618741
(71) Applicant: ArcSoft (Shanghai) Technology Company, Ltd., Shanghai 200041 (CN)
(72) Inventor: Deng, Hui, San Ramon, CA 94582 (US); Tu, JianMing, 156-102 Shanghai (CN)
(74) Representative: Exell, Jonathan Mark

(57) **Abstract**

A first device (104) uses a secondary communication channel (116) to send its public IP address to a second device (106) to setup point-to-point communication over a primary communication channel, such as a public computer network. The secondary channel (116) may be a public switched telephone network, a circuit-switched voice channel in cellular network, a packet-switched voice channel in cellular network, a conventional VoIP service, a text or multimedia channel in a cellular network, a data channel in a cable television or a satellite television network, or a radio frequency channel. Once the connection over the pubic computer network (108) has been established, the first and the second devices exchange data packets carrying text, voice, video, or other data.

## Description

### CROSS REFERENCE TO RELATED APPLICATIONS

This application is related to U.S. Application No. 11/280,688 entitled "Using PSTN to Communicate IP Addresses for Point-to-Point Text, Voice, Video, or Data Communication," filed on November 15, 2005, which is commonly assigned and incorporated herein by reference.

This application is related to European patent application entitled "Determining Pairings of Telephone Numbers and IP Addresses from Caching and Peer-to-Peer Lookup," (agent's ref: JE/N21847) and European patent application entitled "Regional Service by Phone," (agent's ref: JE/N21845) which are concurrently filed, commonly assigned, and incorporated herein by reference.

### DESCRIPTION OF RELATED ART

A conventional Voice over Internet Protocol (IP) communication system uses a centralized directory to establish a connection between VoIP devices over a public computer network (e.g., the Internet). The centralized directory associates static usernames and identities with IP addresses that are likely to change. A change in IP address can occur when a user relocates or reconnects to a network with a dynamic IP address. The centralized directory logs each username and IP address and keeps track of whether users are online or not. When a first user at a first VoIP device wishes to communicate with a second user at a second VoIP device, the first user requests the IP address of the second user from the centralized directory and then uses the IP address to establish a connection with the second user over the Internet.

Centralized directories become costly when the user base scales into the millions. Furthermore, many traditional telephone users are more comfortable with dialing telephone numbers than login into computers. Thus, what is needed is an IP communication system without a centralized directory that is more familiar to traditional telephone users.

### BRIEF DESCRIPTION OF THE DRAWINGS

Fig. 1A illustrates a system for using a secondary communication channel to setup communication over a primary communication channel between VoIP telephone gateway devices in one embodiment of the invention.

Fig. 1B illustrates a VoIP telephone gateway device in the system of Fig. 1A in one embodiment of the invention.

Figs. 2, 3, and 4 are flowcharts of methods for using the secondary communication channels to setup communication over the primary communication channel in embodiments of the invention.

Use of the same reference numbers in different figures indicates similar or identical elements.

### SUMMARY

In one embodiment of the invention, a first device uses a secondary communication channel to send its public IP address to a second device to setup point-to-point communication over a primary communication channel, such as a public computer network. The secondary channel may be a public switched telephone network, a circuit-switched voice channel in cellular network, a packet-switched voice channel in cellular network, a conventional VoIP service, a text or multimedia channel in a cellular network, a data channel in a cable television or a satellite television network, or a radio frequency channel. Once the connection over the pubic computer network has been established, the first and the second devices exchange data packets carrying text, voice, video, or other data.

### DETAILED DESCRIPTION

U.S. Patent Application Serial No. 11/280,688, entitled "Using PSTN to Communicate IP Addresses for Point-to-Point Text, Voice, Video, or Data Communication," filed on November 15, 2005, discloses a method for using the public switched telephone network (PSTN) to exchange Internet Protocol (IP) addresses for point-to-point communication between two devices over a public computer network (e.g., the Internet). In one example, a first IP device uses the PSTN to send its IP address to a second IP device to setup a network connection over the public computer network. The second IP device then sends a network connection request to the first IP device over the public computer network using the IP address. Once the network connection has been established, the IP devices exchange data packets carrying text, voice, video, or data communications between their users. In addition to the PSTN, other communication channels are described in the present application for the IP devices to exchange their IP addresses.

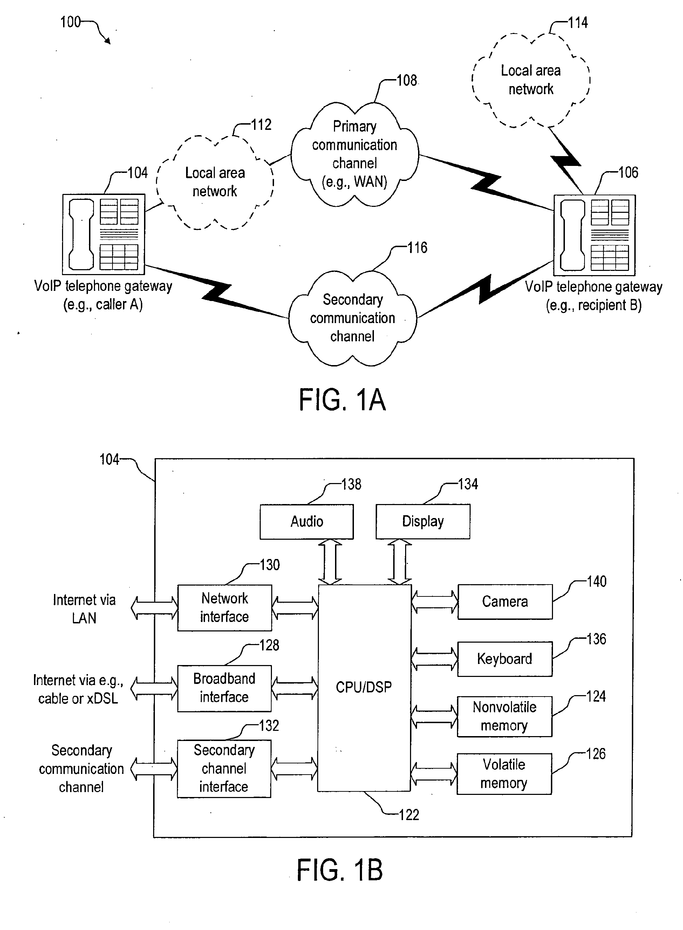

Fig. 1A illustrates a system 100 for establishing point-to-point communication between Voice over Internet Protocol (VoIP) telephone gateway devices 104 and 106 in one embodiment of the invention. VoIP telephone gateways 104 and 106 may be any of the VoIP telephone gateways described in the references mentioned in paragraph 2 above.

VoIP telephone gateways 104 and 106 are connected by a primary communication channel 108 for point-to-point communication. Primary communication channel 108 is a public wide area network (WAN), such as the Internet, which allows VoIP telephone gateways 104 and 106 to exchange data packets through a network connection. In some configurations, VoIP telephone gateway 104 is connected by a local area network (LAN) 112 to WAN 108. In some configurations, VoIP telephone gateway 106 is connected by a modem to WAN 108, and a LAN 114 is connected by VoIP telephone gateway 106 to access WAN 108. VoIP telephone gateways 104 and 106 are connected by a secondary communication channel 116 to exchange public IP addresses to establish a network connection over WAN 108. Various other embodiments of secondary communication channel 116 are described hereafter.

In one embodiment, secondary communication channel 116 is a circuit-switched voice channel in a second generation mobile telephone network, such as a Global System for Mobile communications (GSM) cellular network or a Code Division Multiple Access (CDMA) cellular network.

In one embodiment, secondary communication channel 116 is a circuit-switched voice channel in a third generation mobile telephone network, such as some version of a Wideband Code Division Multiple Access (WCDMA) cellular network, a CDMA2000 cellular network, or a Time Division, Code Division Multiple Access (TD-CDMA) cellular network. One specifically example is WCDMA R99 that has a voice channel using circuit switching.

In one embodiment, secondary communication channel 116 is a packet-switched voice channel in a third generation mobile telephone network, such some version of a WCDMA cellular network, a CDMA2000 cellular network, or a TD-CDMA cellular network. One specific example is WCDMA R6 that has a voice channel using packet switching.

In one embodiment, secondary communication channel 116 is a conventional VoIP system that uses a central directory to connect two devices over WAN 108. In other words, VoIP telephone gateways 104 and 106 may communicate using a conventional VoIP service.

In one embodiment, secondary communication channel 116 is a text or multimedia channel such as a Short Message Service (SMS) or a Multimedia Messaging Service (MMS) on a cellular network.

In one embodiment, secondary communication channel 116 is a data channel such as a digital video channel in a cable television network, a satellite communication channel in a satellite network, or a wireless data channel. A wireless data channel may be a radio frequency (RF) channel such as a Bluetooth channel or other similar RF channels.

Fig. 1B illustrates VoIP telephone gateway 104 in one embodiment of the invention. VoIP telephone gateway 106 may be similarly implemented as VoIP telephone gateway 104. VoIP telephone gateway 104 has the form factor of a telephone or a videophone. VoIP telephone gateway 104 includes a central processing unit (CPU) or digital signal processor (DSP) 122 that executes IP communication software loaded from nonvolatile memory 124 to volatile memory 126. CPU 122 may use a broadband interface device 128 to directly access WAN 108 by cable, xDSL (digital subscriber line), or a cellular network. Broadband interface card 128 may be a cable modem, an xDSL modem, or a wireless access card for a cellular network. CPU 122 may also use a network interface card 130 to access WAN 108 through LAN 112. Network interface card 130 may be a wired or a wireless interface card (e.g., for an Ethernet or a Wi-Fi network). For text, voice, and video communications, CPU 122 may be further connected to peripherals including a display 134, a keypad or keyboard 136, microphone and speaker 138, and a camera 140. In some embodiments, CPU 122 uses a secondary channel interface 132 to access secondary communication channel 116. In these embodiments, secondary channel interface 132 may be a cellular telephone transceiver to access a cellular network, a cable set-top box interface to access a cable television network through a cable set-top box, a satellite set-top box interface to access a satellite network trough a satellite set-top box, or an RF transceiver to access an RF channel.

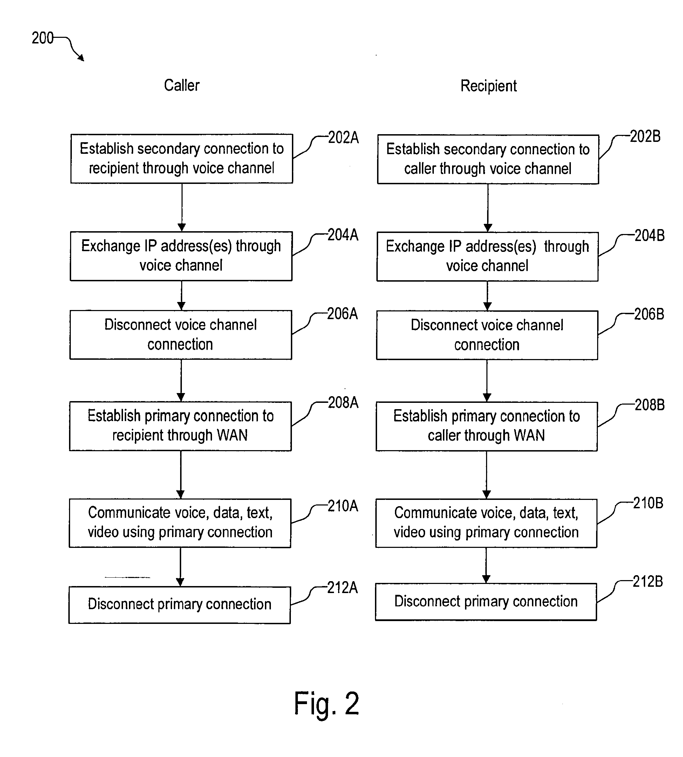

Fig. 2 is a flowchart of a method 200 for using a voice channel 116 to setup communication over WAN 108 in embodiments of the invention. Voice channel 116 may be any of the circuit-switched, packet-switched, and conventional VoIP voice channels described above. To demonstrate method 200, assume a caller is using VoIP telephone gateway 104 to call a recipient using VoIP telephone gateway 106.

In steps 202A and 202B, VoIP telephone gateways 104 and 106 establish a secondary connection over voice channel 116. Specifically, the caller at VoIP telephone gateway 104 dials the telephone number associated with the recipient at VoIP telephone gateway 106 to establish the secondary connection over voice channel 116. As discussed above, voice channel 116 may be any of the circuit-switched, packet-switched, and conventional VoIP voice channels described above. Depending on the voice channel implemented, the appropriate secondary channel interfaces 132 in VoIP telephone gateways 104 and 106 provide the connection over secondary channel 116. Note that for a conventional VoIP voice channel, VoIP telephone gateways 104 and 106 use broadband interface device 128 or network interface card 130 to establish the VoIP voice channel over WAN 108.

In steps 204A and 204B, VoIP telephone gateways 104 and 106 exchange at least one public IP address over voice channel 116. The public IP address may be expressed in a series of standard touch-tones or other types of modem signaling between VoIP telephone gateways 104 and 106. If voice channel 116 permits, the public IP address may be expressed with modem signaling between telephone rings.

In one embodiment, VoIP telephone gateways 104 and 106 exchange their public IP addresses over voice channel 116. In another embodiment, VoIP telephone gateway 104 sends its public IP address to VoIP telephone gateway 106 over voice channel 116 and later receives the public IP address of VoIP telephone gateway 106 in a data packet over WAN 108. In another embodiment, VoIP telephone gateway 104 receives the public IP address of VoIP telephone gateway 106 over voice channel 116 and later sends its public IP address in a data packet to VoIP telephone gateway 106 over WAN 108.

In steps 206A and 206B, VoIP telephone gateways 104 and 106 disconnect their secondary connection over voice channel 116.

In steps 208A and 208B, VoIP telephone gateways 104 and 106 establish a primary connection over WAN 108 using their public IP addresses.

In steps 210A and 210B, VoIP telephone gateways 104 and 106 exchange data packets carrying voice, data, text, video, or other data over WAN 108.

In steps 212A and 212B, VoIP telephone gateways 104 and 106 disconnect their primary connection over WAN 108.

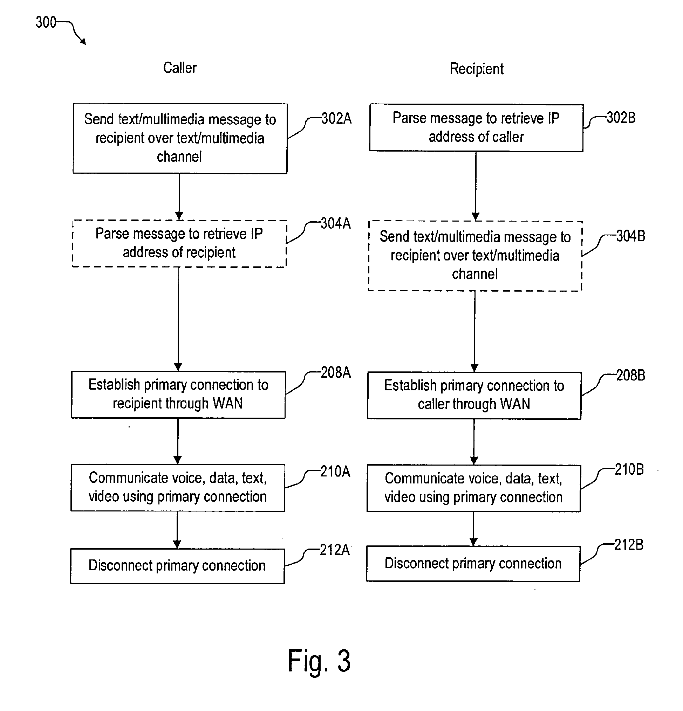

Fig. 3 is a flowchart of a method 300 for using a text or multimedia channel 116 in a cellular network to setup communication over WAN 108 in embodiments of the invention. To demonstrate method 300, assume a caller is using VoIP telephone gateway 104 to call a recipient using VoIP telephone gateway 106.

In steps 302A, VoIP telephone gateway 104 sends a text or multimedia message to VoIP telephone gateway 106 over text/multimedia channel 116. Specifically, the caller at VoIP telephone gateway 104 dials the telephone number associated with the recipient at VoIP telephone gateway 106 and VoIP telephone gateway 104 sends the text/multimedia message to the telephone number of VoIP telephone gateway 106. The text/multimedia message includes the public IP address of VoIP telephone gateway 104. The text/multimedia message may further include the telephone number associated with VoIP telephone gateway 104.

In step 302B, VoIP telephone gateway 106 receives the text/multimedia message and parses the public IP address and the optional telephone number of VoIP telephone gateway 104 from the text/multimedia message.

In optional step 304B, VoIP telephone gateway 106 sends a text/multimedia message to VoIP telephone gateway 104 over text/multimedia channel 116. Specifically, VoIP telephone gateway 106 sends the text/multimedia message to the telephone number of VoIP telephone gateway 104. The text/multimedia message includes the public IP address of VoIP telephone gateway 106.

In optional step 304A, VoIP telephone gateway 104 receives the text/multimedia message and parses the public IP address of VoIP telephone gateway 106 from the text/multimedia message.

In steps 208A and 208B, VoIP telephone gateways 104 and 106 establish a primary connection over WAN 108 using their public IP addresses.

In steps 210A and 210B, VoIP telephone gateways 104 and 106 exchange data packets carrying voice, data, text, video, or other data over WAN 108.

In steps 212A and 212B, VoIP telephone gateways 104 and 106 disconnect their primary connection over WAN 108.

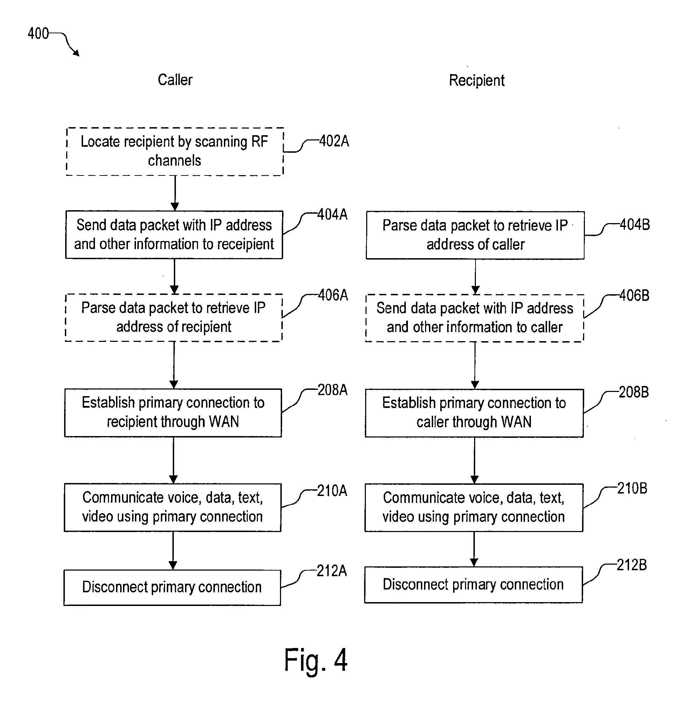

Fig. 4 is a flowchart of a method 400 for using data channel 116 in a cable television network, a satellite network, or a data wireless network, to setup communication over WAN 108 in embodiments of the invention. To demonstrate method 400, assume a caller is using VoIP telephone gateway 104 to call a recipient using VoIP telephone gateway 106.

In optional step 402A, where data channel 116 is an RF channel and VoIP telephone gateways 104 and 106 have RF transceivers, VoIP telephone gateway 104 scans the RF frequencies to locate VoIP telephone gateway 106. Specifically, VoIP telephone gateway 104 searches the RF frequencies for all the peer devices at its location and solicits identifying information from the peer devices. In response, the peer devices provide identifying information in text (e.g., by providing their user names or associated telephone numbers) or voice (e.g., by the users answering the RF call) so the caller at VoIP telephone gateway 104 can decide to further continue to communicate with which peer device.

In step 404A, VoIP telephone gateway 104 sends a data packet with its public IP address to VoIP telephone gateway 106 over data channel 116. If data channel 116 is a cable television network or a satellite network, VoIP telephone gateway 104 sends the data packet through a connected set-top box over the cable television or satellite network to another set-top box connected to VoIP telephone gateway 106. The set-top boxes connected to VoIP telephone gateways 104 and 106 may have assigned IDs for identifying each other in communication over the cable television or satellite network. If data channel 116 is an RF channel, VoIP telephone gateway 104 sends the data packet using the RF frequency of VoIP telephone gateway 106.

In step 404B, VoIP telephone gateway 106 receives the data packet and parses the public IP address from the data packet.

In optional step 406B, VoIP telephone gateway 106 sends a data packet with its public IP address to VoIP telephone gateway 104 over data channel 116.

In optional step 406B, VoIP telephone gateway 104 receives the data packet and parses the public IP address of VoIP telephone gateway 106 from the data packet.

In steps 208A and 208B, VoIP telephone gateways 104 and 106 establish a primary connection over WAN 108 using their public IP addresses.

In steps 210A and 210B, VoIP telephone gateways 104 and 106 exchange data packets carrying voice, data, text, video, or other data over WAN 108.

In steps 212A and 212B, VoIP telephone gateways 104 and 106 disconnect their primary connection over WAN 108.

The disclosures in United States patent application no. 11/618, 741 from which this application claims priority, and in the abstract accompanying this application are incorporated herein by reference.

## Claims

1. A method for using a secondary communication channel to exchange a public computer network address for point-to-point communication between a first device and a second device over a public computer network, comprising:
communicating the public computer network address between the first and the second devices over the secondary communication channel;
establishing a network connection between the first and the second devices over the public computer network using the public computer network address; and
exchanging data packets between the first and the second devices over the public computer network.

2. The method of claim 1, wherein the secondary channel is selected from the group consisting of a circuit-switched voice channel in a cellular network and a packet-switched voice channel in a cellular network.

3. The method of claim 2, wherein said communicating the public computer network address comprises:
the first device calling the second device over the secondary channel; and
the first device sending touch-tones representing the public computer network address to the second device.

4. The method of claim 1, wherein the secondary channel is selected from the group consisting of a text channel in a cellular network and a multimedia channel in a cellular network.

5. The method of claim 4, wherein said communicating the public computer network address comprises the first device sending a message to a telephone number associated with the second device, wherein the message includes the public computer network address and the second device parses the public computer network address from the message.

6. The method of claim 1, wherein the secondary channel is a Voice over Internet Protocol service.

7. The method of claim 6, wherein said communicating the public computer network address comprise:
the first device calling the second device over the secondary channel; and
the first device sending touch-tones representing the public computer network address to the second device.

8. The method of claim 1, wherein the secondary channel is selected from the group consisting of a data channel in a cable television network and a data channel in a satellite network.

9. The method of claim 8, wherein said communicating the public computer network address comprises the first device sending a data packet to the second device, wherein the data packet includes the public computer network address and the second device parses the public computer network address from the data packet.

10. The method of claim 1, wherein the secondary channel is a data channel in a radio frequency channel.

11. The method of claim 10, further comprising, prior to said communicating the public computer network address:
scanning radio frequencies for peer devices; and
determining the second device from the peer devices.

12. The method of claim 10, wherein said communicating the public computer network address comprises the first device sending a data packet to the second device, wherein the data packet includes the public computer network address and the second device parses the public computer network address from the data packet.

13. A computer program comprising computer program code means for performing all of the steps of any of claims 1 to 12 when said program is run on a computer.

14. A computer program as claimed in claim 13 embodied on a computer readable medium.
